# EUROPEAN PATENT SPECIFICATION

(11) **EP 1 754 592 B1**
(45) Date of publication and mention of the grant of the patent: **29.06.2011**
(21) Application number: 05736726.0
(22) Date of filing: 28.04.2005
(51) Int. Cl.: B29D 30/16, B29D 30/30

(54) **METHOD AND APPARATUS FOR TIRE MANUFACTURING**
VERFAHREN UND VORRICHTUNG ZUR REIFENHERSTELLUNG
MÉTHODE ET APPAREIL DE FABRICATION DE PNEUMATIQUES

(30) Priority: 08.06.2004 JP 2004169382
(43) Date of publication of application: 21.02.2007
(73) Proprietor: Bridgestone Corporation, Tokyo 104-8340 (JP)
(72) Inventor: OGAWA, Yuichiro BRIDGESTONE CORPORATION, Tech.Cen., Tokyo 1878531 (JP)
(74) Representative: Whalley, Kevin
(86) International application number: PCT/JP2005/008162
(87) International publication number: WO 2005/120813

(56) References cited:
- WO-A1-02/078939
- GB-A- 430 324
- JP-A- 2000 094 542
- JP-A- 2002 187 218
- US-A- 3 177 918
- US-A- 3 904 459

## Description

The present invention relates to a method for manufacturing a tire including a step of forming a specified tire component member by spirally winding a ribbon-shaped rubber strip while making an overlapping portion to apply it directly or indirectly on a building platform such as a rigid core or a building drum, and an apparatus used for this method. Specifically, the present invention relates to preventing the rubber strip from falling off from the tire sidewall, which reduces the durability of a product tire.

In recent years, in order to reduce process manpower and operation time necessary for the tire-building process as well as to realize a smaller manufacturing unit by eliminating the use of an apparatus for manufacturing tire component members, a method for manufacturing a specified product tire has been proposed, in which, instead of separately preparing each of tire component members such as an inner liner, a bead filler, a side rubber and a tread rubber, a ribbon-shaped rubber strip is spirally wound and applied on a building platform such as a rigid core or a building drum while making an overlapping portion to build a specified green tire and the green tire is vulcanized to obtain the specified product tire (see Japanese Patent Application Laid-Open No.2000-289122, for example).

In this method, a stepped part, the height of which corresponds to that of the rubber strip, occurs at the overlapping portion exposed to the outer surface of the tire component member and this stepped part cannot be sufficiently molded especially at the sidewall portion during the vulcanization, so that bares and flow cracks may be present in the product tire, which cause problems of deteriorating the durability of the product tire.

Moreover, air enclosed between the stepped part of the overlapping portion and a tire-vulcanizing mold is also likely to remain in the tire component member as it is incorporated by a rubber flow during the vulcanization, with the result that the durability of the product tire may be deteriorated as stress concentrates at the air-remaining portion in using the product tire.

In order to suppress the residual air and occurrences of bares, flow cracks and the like in the product tire by eliminating the stepped part, EP1375118-A describes a method of smoothing the outer surface of the tire component member by flattening the stepped part formed at the overlapping portion under pressure by the roller or the like. However, the rubber strip has low plasticity at ambient temperature, so that, in order to flatten the step sufficiently under pressure, pressing force applied to the roller has to be excessive or pressing time by the roller has to be long. Therefore, it is difficult to improve production efficiency and, moreover, it is possible that the desired durability is not acquired as the shape of the rubber returns back to the original shape after pressing due to the elasticity of the rubber.
Attention is also drawn to the disclosure of US-3177918A.

Therefore, the object of the present invention is to provide a tire-manufacturing method according to claim 1, which can suppress residual air and occurrences of bares, flow cracks and the like, which cause a reduction of the durability of a product tire, by flattening a stepped part formed at an overlapping portion of a tire component member under pressure to optimize a cross sectional shape of the overlapping portion, and an apparatus used for this method.

In order to achieve the above-mentioned object, the tire-manufacturing method according to the invention comprises a step of forming a specified tire component member by spirally winding a ribbon-shaped rubber strip while making an overlapping portion to apply it directly or indirectly on a building platform such as a rigid core or a building drum, wherein a stepped part of the overlapping portion exposed to the outer surface of the tire component member is flattened under pressure by a roller which is arranged to face the building platform with a specified slip angle with respect to the extending direction of the applied rubber strip and which is heated up to a plasticizing temperature region to smoothen the outer surface of the tire.

Moreover, a difference between rotational speeds of the building platform and the pressing roller is preferably within a range of 0-30% of a rotational speed of the building platform.

Furthermore, the slip angle is preferably 30 degrees or less.

Moreover, the pressing roller is preferably heated up to 100-130 degrees Celsius.

In addition, the pressing roller preferably flattens the stepped part of the overlapping portion under pressure with a pressing force of the pressing roller against the building platform being within a range of 200-1000 kPa.

The step of spirally winding the rubber strip to apply it on the building platform and the step of flattening by the pressing roller are performed with a specified time difference between the steps.

When securely flattening is an important concern, the step of flattening by the pressing roller is preferably performed after finishing the step of spirally winding the rubber strip to apply it on the building platform. In this case, it is more preferable to move the pressing roller in the direction opposed to that in the step of spirally winding the rubber strip.

Moreover, the pressing roller is inclined with respect to the normal line to the tire surface toward its moving direction to have a camber angle.

The tire-manufacturing apparatus according to the invention is provided as claimed in claim 8.

Moreover, the pressing roller is preferably provided with knurling on its surface.

The invention will be further described with reference to the accompanying drawings, wherein
FIG. 1 is a schematic view of one embodiment of a tire-manufacturing apparatus which is
   useful for understanding the invention;
FIG. 2 is a side view of the tire-manufacturing apparatus shown in FIG. 1;
FIG. 3 is a diagram showing a procedure of forming a tire component member which is useful for understanding the invention,
FIG. 4 is a top view of a pressing roller;
FIG. 5 is a cross sectional view of a tire component member formed which is useful for understanding the invention;
FIG. 6 shows an example of a procedure of flattening a stepped part of an overlapping portion which is useful for understanding the invention;
FIGS. 7(a) and 7(b) are graphical representations showing roughness of an outer surface of a tire component member; and
FIGS. 8(a) and 8(b) show other examples of a procedure of flattening a stepped part of an overlapping portion according to the invention.

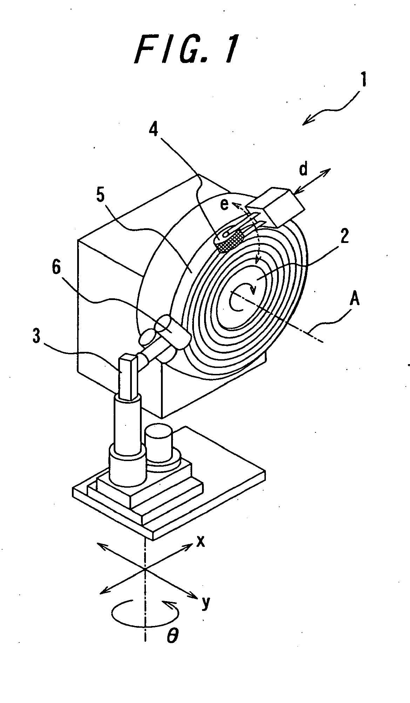

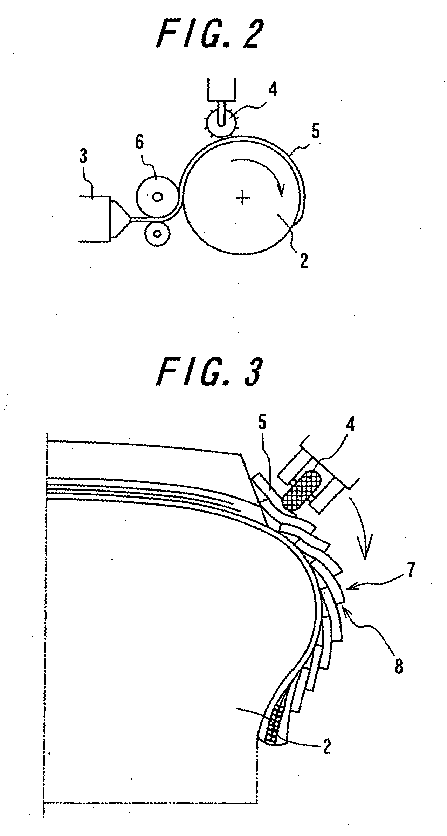

In the following, embodiment are described with reference to accompanying drawings. FIG. 1 is a schematic view of an exemplary tire-manufactturing apparatus; FIG. 2 is a side view of the tire-manufacturing apparatus shown in FIG. 1

The tire manufacturing apparatus 1 shown in FIGS. 1 and 2 has a building platform 2 such as a rigid core or a building drum, a rubber strip extruder 3, and a pressing roller 4. The building platform 2 is mounted rotatably around a rotation axis A. Moreover, the rubber strip extruder 3 serves for continuously providing a ribbon-shaped rubber strip 5 having a specified width, for example, through a winder 6 to the building platform 2. The rubber strip extruder 3 and the winder 6 are displaceable in the directions as shown by arrows x, y, and θ in the figure so that they can be constantly kept in a specified position and angle with respect to an applied surface of the building platform2. In forming a specified tire component member, the rubber strip 5 extruded from the rubber strip extruder 3 is spirally wound and applied on a building platform 2 while rotating the building platform 2 around the rotation axis A, while making an overlapping portion width of which is preferably within a range of 5-90% of that of rubber strip 5. In this state, the rubber strip 5 may be applied directly on the building platform 2, but other component member such as an inner liner may be preliminary applied on the building platform 2, if necessary, and the rubber strip 5 may be indirectly applied to the building platform 2 on the above-mentioned component member.

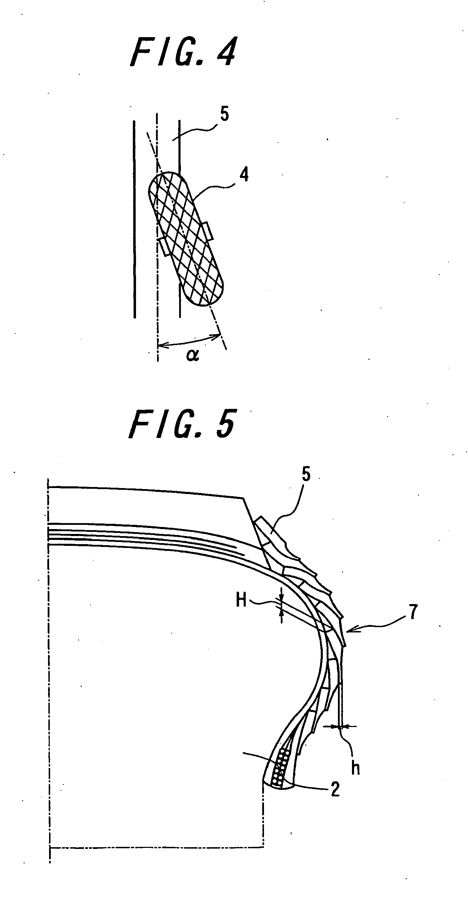

The main constitutional feature of the invention lies in that the stepped part 8 of the overlapping portion 7 exposed to the outer surface of the tire component member is flattened, as shown in FIG. 3, to smoothen the outer surface of the tire by means of the pressing roller 4 which is arranged to face the building platform 2 with a specified slip angle a with respect to the extending direction of the applied rubber strip 5, as shown in FIG. 4, and is heated up to a plasticizing temperature region.

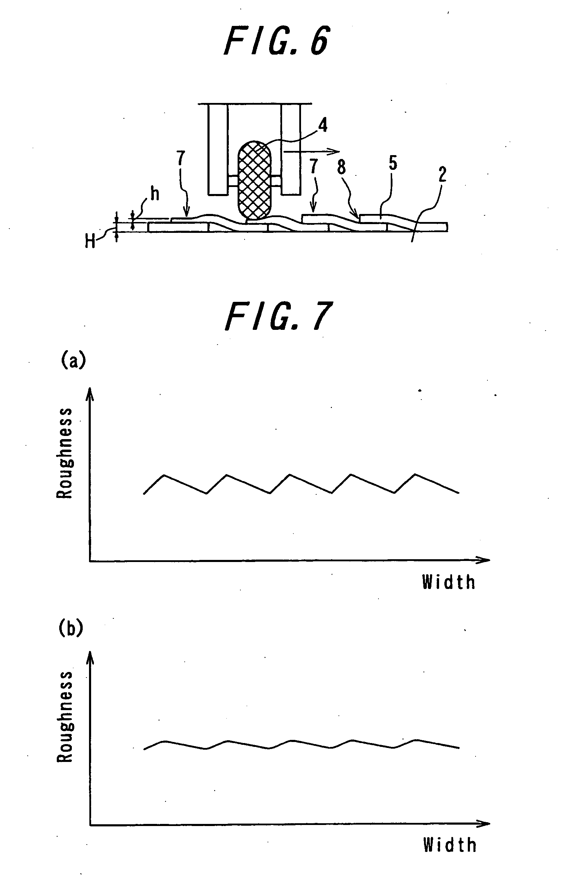

In the following, it will be discussed, along with its operation, how the above-mentioned arrangement is adopted. As described above, when the rubber strip is applied on the building platform to form the tire component member, the stepped part having a height corresponding to that of the rubber strip occurs at the overlapping portion exposed to the outer surface of the tire component member. FIG. 7(a) is a graphical representation of roughness of the outer surface of the tire component member in such a state. If a stepped part exists in this way, an unevenness of the outer surface increases to prevent close contact between the tire-vulcanizing mold and the tire component member, so that insufficient molding in the vulcanization is likely to occur and air enclosed between the stepped part of the overlapping portion and a tire-vulcanizing mold is likely to remain in the tire component member as it is incorporated by a rubber flow during the vulcanization. Therefore, bares and flow cracks occur from said stepped part and stress concentrates at the air-remaining portion, which may deteriorate the durability of the product tire.

In order to eliminate the stepped part, a method is proposed for smoothening the outer surface of the tire component member in which the stepped part formed at the overlapping portion is flattened by a roller or the like - under pressure. However, in the ambient temperature range, the rubber strip deforms dominantly by elastic deformation rather than plastic deformation, so that, in order to flatten the stepped part under pressure to the extent that the tire-vulcanizing mold and the tire component member can be closely contacted, the pressing force applied to the roller has to be excessive or the pressing time by the roller has to be long. Therefore, it is difficult to improve production efficiency and, moreover, the desired durability cannot be acquired as the shape of the rubber returns back to the original shape due to the elasticity of the rubber after the pressing and before the vulcanization.

The inventor found that when the roller is heated up to the plasticizing temperature where the rubber strip deforms dominantly by plastic deformation rather than elastic deformation, the rubber strip deforms easily due to the heat upon pressing the stepped part under pressure with relatively small pressing force for relatively short pressing time, so that the outer surface of the tire component member is flattened sufficiently as shown in FIG. 7(b) and the amount of recovery in shape after pressing due to elasticity is reduced, which can prevent the occurrence of bares and flow cracks as well as the residual air in the stepped part and therefore improve the durability of the product tire. The present invention has been completed in this way.

Moreover, the pressing roller 4 may be rotatably supported by a bearing or the like and the rotational speed of the pressing roller 4 may conform to that of the building platform 2. Alternatively, the pressing roller 4 may also be rotationally driven and have a difference in rotational speed with respect to that of the building platform 2. The reason is that, if the rubber strip is pressed under these circumstances, shear stress is produced in a rotational direction of the building platform 2, thereby enhancing the flattening effect. In this case, the difference in rotational speed is preferably 30 % or less of the rotational speed of the building platform. When the difference in rotational speed exceeds 30%, the shear stress becomes excessive and can damage the outer surface of the rubber strip 5.

Further, the slip angle α of the pressing roller 4 is preferably 30 degrees or less. By providing the slip angle α to the pressing roller 4, shear stress is produced in a rotational direction of the building platform 2, thereby enhancing the flattening effect. The reason why the slip angle α is preferably 30 degrees or less is that, when the slip angle is larger than 30 degrees, the shear stress becomes excessive and can damage the outer surface of the rubber strip 5. In addition, it is more preferable that the slip angle is within a range of 0-10 degrees.

Furthermore, the pressing roller 4 is preferably heated up to 100-130 degrees Celsius. The reason is that, when the temperature of the pressing roller 4 is less than 100 degrees Celsius, the pressing time and/or the pressing force need to be larger for securely flattening, with the result that the manufacturing efficiency is deteriorated. When the temperature exceeds 130 degrees Celsius, flow of the rubber strip 5 is likely to occur, with the result that a part pressed by the pressing roller 4 may form a recess, the rubber strip may adhere to the pressing roller 4, and the surface of the rubber may get burned.

FIG. 5 shows a state of the tire component member shown in FIG. 3 after pressing the overlapping portion 7 under pressure. The pressing roller preferably presses the stepped part 8 of the overlapping portion 7 under pressure with a pressing force of the pressing roller against the building platform being within a range of 200-1000 kPa. The reason is that, when the pressing force is less than 200 kPa, the flattening effect can be insufficient and, when the pressing force is more than 1000 kPa, a part pressed by the pressing roller 4 may form a recess. In addition, the pressing force of the pressing roller 4 is preferably chosen so that the height h of the stepped part 8 of the overlapping portion 7 after flattening as shown in FIG. 6 is within a range of 40-90 % of the thickness H of the rubber strip 5.

When it is more important to reduce the operation time, the step of spirally winding the rubber strip 5 to apply it on the building platform 2 and the step of flattening by the pressing roller 4 are preferably performed as shown in FIG. 2 with a specified time difference, preferably of a second or less between the steps. In this case, the moving direction of the pressing roller 4 inevitably corresponds to the applying direction of the strip so that a force is produced to separate the rubber strip 5 from the adjacent rubber strip 5 which forms the overlapping portion 7 with the former rubber strip 5. However, the pressing roller 4 has the slip angle and the shear force produced by the slip angle is much larger than said separating force, so that the overlapping portion 7 can be effectively flattened as a whole.

When more stabilized flattening is needed, the step of flattening by the pressing roller 4 is preferably performed after finishing the step of spirally winding the rubber strip to apply it on the building platform as shown in FIGS. 3 and 6. In this way, it is possible to separately perform the step of flattening the stepped part 8, optimizing the rotation and the positioning of the building platform 2 and the pressing roller 4 and, in addition, the pressing roller 4 can be moved in the direction opposed to that of the step of applying the strip. In this case, the stepped part 8 can be efficiently flattened so that said separating force is not produced, thereby further securing the flattening of the overlapping portion 7.

The surface of the pressing roller 4 is kept at specified temperature by means of a heater and a temperature controller. The heater can be embedded in the pressing roller 4 or can be located outside the heat pressing roller 4 by radiant heat. Alternatively, the pressing roller 4 itself can consist of a heating element.

Moreover, the pressing roller 4 is preferably provided with knurling on the surface as shown in FIG. 4. Unevenness on the surface formed by the knurling increases friction between the pressing roller 4 and the rubber strip 5, thereby further securing the flattening of the overlapping portion 7. From the viewpoint of stable flattening, the width of the pressing roller 4 is more preferably within a range of 25-100 % of the width of the rubber strip 5. The knurling is more preferably provided on the surface region having a width within a range of 25-100 % of the width of the pressing roller 4. The depth of the knurling is more preferably within a range of 5-50 % of the width H of the rubber strip 5.

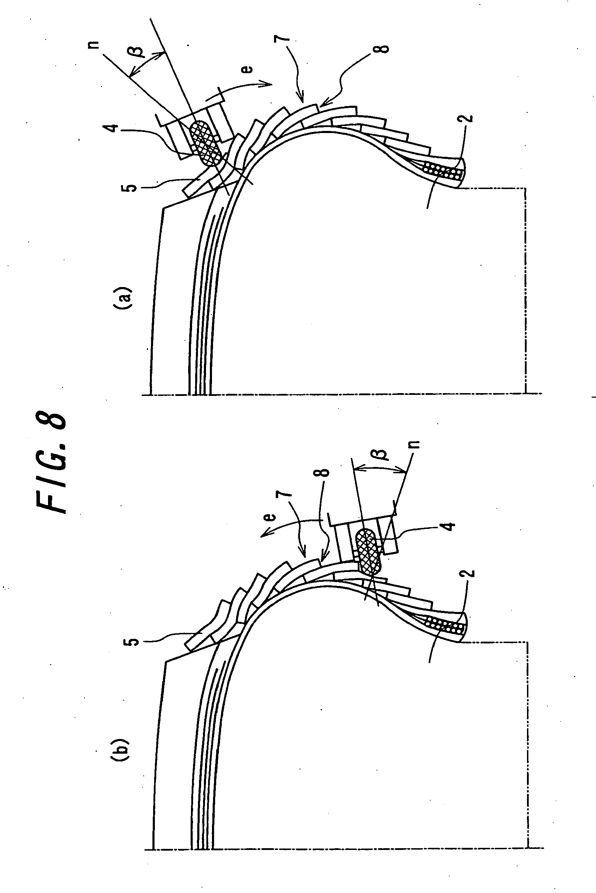

FIG. 8(a) shows an embodiment of the invention, in particular a case where the step of flattening is performed by moving the pressing roller 4 from a tread portion toward a bead portion in a direction as shown by the arrow e. FIG. 8(b) shows an embodiment of the invention in which the step of flattening is performed by moving the pressing roller from the bead portion toward the tread portion in a direction as shown by the arrow e. As shown in these figures, the pressing roller 4 is preferably inclined toward its moving direction e with respect to the normal line to the tire surface to have a camber angle β. By inclining the pressing roller 4 with respect to the normal line to the tire surface in the pressing direction to provide the chamber angle β, effects of expanding, flattening, and pressing can be exerted in the widthwise direction of the rubber strip. From the viewpoint of preventing the rubber strip 5 from falling apart, the cHamber angle β is preferably within a range of 15 degrees or less. When the moving speed of the pressing roller 4 is fast, the cHamber angle β is more preferably set to be large, and when the moving speed is slow, the cHamber angle β is more preferably set to be small. More preferably, the cHamber angle β is controlled as a function of the moving speed of the pressing roller.

The descriptions above show only a part of the preferred embodiments of the invention, and various modifications can be made within the scope of the appended claims. For example, FIG. 1 shows an example in which the whole overlapped portion is flattened by one pressing roller. However,
pressing rollers may be provided respectively on the right and left sides of the building platform to simultaneously flatten the overlapped portion of the right and left.

A tire is experimentally manufactured by the method in accordance with the invention and evaluations are made for this tire, which is described in the following.

An Example tire is built by spirally winding a ribbon shaped rubber having a width of 15 mm and a thickness of 1.0 mm while making an overlapping portion of 5 mm to apply it on a building platform and by pressing a stepped part of the overlapping portion under pressure with a pressing roller which is heated up to 110 degrees Celsius. In this process, a difference between rotational speeds of the building platform and the pressing roller is 5 % of a rotational speed of the building platform; a slip angle with respect to the extending direction of the applied rubber strip is 2 degrees; a pressing force of the pressing roller is 500 kPa; the step of spirally winding the rubber strip to apply it on the building platform and the step of flattening by the pressing roller are performed simultaneously with a specified time difference between the steps; and the pressing roller has a cHamber angle of 5 degrees.

For the purpose of comparison, a tire is built by the same process as the Example tire except that the pressing roller is not used (in the case of "Conventional tire") or a tire has the same configuration as that of the Example tire except that the pressing roller is not heated, in which the surface of the pressing roller is 20 degrees("Comparative tire").

The height of the stepped part formed at the overlapping portion of each of the above-mentioned test tires is measured immediately after building the green tire and just before the vulcanization of the green tire. The measured values are shown in Table 1.

After measuring the stepped parts, each test tire is vulcanized in a tire-vulcanizing mold, and the tires, tire size of which are 215/45R17, are obtained. Each tire is mounted on a standard rim (7JJ) to assemble a tire wheel. Each wheel is inflated with an air pressure of 200 kPa (relative pressure) and driven on a drum test machine under conditions of running velocity of 210 km/h and a tire load mass of 5 kN. The running distance until cracking occurs in the tire or it reaches 10,000 km is measured to evaluate the durability of the tire. The running distances of each test tire are shown in Table 1.

**[TABLE 1]**

| | Stepped portion | | Running Distance |
|---|---|---|---|
| | Immediately after molding | Just before vulcanization | |
| Conventional tire | 1.0mm | 1.0mm | 6,500km |
| Comparative tire | 0.3mm | 0.8mm | 8,500km |
| Example tire | 0.3mm | 0.3mm | 10,000km |

As shown in Table 1, the Conventional tire and the Comparative tire do not achieve a running distance of 10,000 km. A region where cracking occurs is visually inspected to find in both tires a crack extending from the stepped part of the outer surface of the sidewall portion toward inside of the tire. In contrast, in the Example tire, cracking is not found by visual observation after finishing the running test of 10,000 km. Thus, it is understood that the Example tire has superior durability compared with the Conventional tire and the Comparative tire.

According to the invention, it becomes possible to provide a tire-manufacturing method which can suppress residual air and the occurrences of bares, flow cracks and the like, which cause reduction of the durability of the product tire, by flattening the stepped part formed at the overlapping portion of the tire component member under pressure to optimize a cross sectional shape of the overlapping portion, and an apparatus used for this method.

## Claims

1. A method for manufacturing a tire comprising a step of forming a specified tire component member by spirally winding a ribbon-shaped rubber strip (5) while making an overlapping portion (7) to apply it directly or indirectly on a building platform (2) such as a rigid core or a building drum, wherein a stepped part (8) of the overlapping portion exposed to the outer surface of the tire component member is flattened under pressure by a pressing roller (4) which is arranged to face the building platform with a specified slip angle (a) with respect to the extending direction of the applied rubber strip and which is heated up to a plasticizing temperature region to smoothen the outer surface of the tire, wherein the step of spirally winding the rubber strip (5) to apply it on the building platform (2) and the step of flattening by the pressing roller (4) are performed with a specified time difference between the steps, and wherein the pressing roller (4) is inclined with respect to the normal line to the tire surface toward its moving direction to have a camber angle (β).

2. A method for manufacturing a tire as claimed in claim 1, wherein a difference between rotational speeds of the building platform (2) and the pressing roller (4) is within a range of 0-30% of a rotational speed of the building platform.

3. A method for manufacturing a tire as claimed in claim 1 or 2, wherein the slip angle (α) is 30 degrees or less.

4. A method for manufacturing a tire as claimed in any of claims 1 to 3, wherein the pressing roller (4) Is heated up to 100-130 degrees Celsius.

5. A method for manufacturing a tire as claimed in any of claims 1 to 4, wherein the pressing roller (4) flattens the stepped part (8) of the overlapping portion (7) under pressure with a pressing force of the pressing roller against the building platform (2) being within 200-1000 kPa.

6. A method for manufacturing a tire as claimed in any of claims 1 to 5, wherein the step of flattening by the pressing roller (4) is performed after finishing the step of spirally winding the rubber strip (5) to apply it on the building platform (2).

7. A method for manufacturing a tire as claimed in claims 6, wherein the pressing roller (4) is moved in the direction opposed to that in the step of spirally winding the rubber strip (5) to press the stepped part (8) under pressure.

8. An apparatus (1) for manufacturing a tire, comprising a building platform (2) such as a rigid core or a building drum; a rubber strip extruder (3) for extruding a ribbon-shaped rubber strip (5) which Is displaceable along the outer surface of the building platform and which is spirally wound and applied directly or indirectly on the building platform while making an overlapping portion (7) to form a specified tire component member; a pressing roller (4) for flattening a stepped part (8) of the overlapping portion exposed to the outer surface of the tire component member under pressure, the pressing roller being arranged to face the building platform with a specified slip angle (α) with respect to the extending direction of the applied rubber strip; a heater for heating up the surface of said roller; and a temperature controller connected to the heater to keep the roller at a specified temperature, wherein the pressing roller (4) is adapted to be moved in the direction opposed to that in the step of spirally winding the rubber strip (5), to press the stepped part (8) under pressure, and wherein the pressing roller (4) is inclined with respect to the normal line to the tire surface toward its moving direction to have a camber angle (β).

9. Apparatus for manufacturing a tire as claimed in claim 8, wherein the pressing roller (4) is provided with knurling on its surface.

## Patentansprüche

1. Verfahren zum Herstellen eines Reifens, das einen Schritt des Formens eines spezifizierten Reifenbestandteil-Elements durch das spiralförmige Wickeln eines bandförmigen Gummistreifens (5) umfasst, während ein überlappender Abschnitt (7) hergestellt wird, um ihn unmittelbar oder mittelbar auf eine Aufbauplattform (2), wie beispielsweise einen starren Kern oder eine Aufbautrommel, aufzubringen, wobei ein abgestufter Teil (8) des überlappenden Abschnitts, der zu der Außenfläche des Reifenbestandteil-Elements freigelegt ist, unter Druck durch eine Druckwalze (4) abgeflacht wird, die so angeordnet ist, dass sie mit einem spezifizierten Schräglaufwinkel (α) in Bezug auf die Ausdehnungsrichtung des aufgebrachten Gummistreifens der Aufbauplattform gegenüberliegt, und die bis zu einem Weichmachungstemperaturbereich erhitzt wird, um die Außenfläche des Reifens zu glätten, wobei der Schritt des spiralförmigen Wickelns des Gummistreifens (5), um ihn auf die Aufbauplattform (2) aufzubringen, und der Schritt des Abflachens durch die Druckwalze (4) mit einem spezifizierten Zeitunterschied zwischen den Schritten ausgeführt werden und wobei die Druckwalze (4) in Bezug auf die Senkrechte zu der Reifenoberfläche zu ihrer Bewegungsrichtung hin geneigt ist, so dass sie einen Sturzwinkel (β) hat.

2. Verfahren zum Herstellen eines Reifens nach Anspruch 1, wobei ein Unterschied zwischen den Umdrehungsgeschwindigkeiten der Aufbauplattform (2) und der Druckwalze (4) innerhalb eines Bereichs von 0 bis 30 % einer Umdrehungsgeschwindigkeit der Aufbauplattform liegt.

3. Verfahren zum Herstellen eines Reifens nach Anspruch 1 oder 2, wobei der Schräglaufwinkel (α) 30° oder weniger beträgt.

4. Verfahren zum Herstellen eines Reifens nach einem der Ansprüche 1 bis 3, wobei die Druckwalze (4) auf bis zu 100 bis 130 Grad Celsius erhitzt wird.

5. Verfahren zum Herstellen eines Reifens nach einem der Ansprüche 1 bis 4, wobei die Druckwalze (4) den abgestuften Teil (8) des überlappenden Abschnitts (7) unter Druck abflacht, wobei eine Druckkraft der Druckwalze gegen die Aufbauplattform (2) innerhalb von 200 bis 1000 kPa liegt.

6. Verfahren zum Herstellen eines Reifens nach einem der Ansprüche 1 bis 5, wobei der Schritt des Abflachens durch die Druckwalze (4) nach dem Abschließen des Schrittes des spiralförmigen Wickelns des Gummistreifens (5), um ihn auf die Aufbauplattform (2) aufzubringen, ausgeführt wird.

7. Verfahren zum Herstellen eines Reifens nach Anspruch 6, wobei die Druckwalze (4) in der Richtung bewegt wird, die entgegengesetzt zu derjenigen in dem Schritt des spiralförmigen Wickelns des Gummistreifens (5) ist, um den abgestuften Teil (8) unter Druck zu pressen.

8. Vorrichtung (1) zum Herstellen eines Reifens, die eine Aufbauplattform (2), wie beispielsweise einen starren Kern oder eine Aufbautrommel, einen Gummistreifen-Extruder (3) zum Extrudieren eines bandförmigen Gummistreifens (5), der längs der Außenfläche der Aufbauplattform verschoben werden kann und der spiralförmig gewickelt und unmittelbar oder mittelbar auf die Aufbauplattform aufgebracht wird, während ein überlappender Abschnitt (7) hergestellt wird, um ein spezifiziertes Reifenbestandteil-Element zu formen, eine Druckwalze (4) zum Abflachen eines abgestuften Teils (8) des überlappenden Abschnitts, der zu der Außenfläche des Reifenbestandteil-Elements freigelegt ist, unter Druck, wobei die Druckwalze so angeordnet ist, dass sie mit einem spezifizierten Schräglaufwinkel (α) in Bezug auf die Ausdehnungsrichtung des aufgebrachten Gummistreifens der Aufbauplattform gegenüberliegt, eine Heizvorrichtung zum Aufheizen der Oberfläche der Walze und einen mit der Heizvorrichtung verbundenen Temperaturregler, um die Walze bei einer spezifizierten Temperatur zu halten, umfasst, wobei die Druckwalze (4) dafür eingerichtet ist, in der Richtung bewegt zu werden, die entgegengesetzt zu derjenigen in dem Schritt des spiralförmigen Wickelns des Gummistreifens (5) ist, um den abgestuften Teil (8) unter Druck zu pressen, und wobei die Druckwalze (4) in Bezug auf die Senkrechte zu der Reifenoberfläche zu ihrer Bewegungsrichtung hin geneigt ist, so dass sie einen Sturzwinkel (β) hat.

9. Vorrichtung zum Herstellen eines Reifens nach Anspruch 8, wobei die Druckwalze (4) mit einer Rändelung auf ihrer Oberfläche versehen ist.

## Revendications

1. Procédé de fabrication d'un bandage pneumatique, comprenant une étape de formation d'un composant spécifié du bandage pneumatique en enroulant en spirale une bande de caoutchouc en forme de ruban (5), tout en formant une partie à chevauchement (7), pour l'appliquer directement ou indirectement sur une plate-forme de confection (2), par exemple un noyau rigide ou un tambour de confection, une partie étagée (8) de la partie à chevauchement exposée à la surface externe du composant du bandage pneumatique étant aplatie sous pression par un rouleau de pression (4), agencé de sorte à faire face à la plate-forme de confection, avec un angle de dérive spécifique (α) par rapport à la direction d'extension de la bande de caoutchouc appliquée, et chauffé vers une région de la température de plastification pour lisser la surface externe du bandage pneumatique, l'étape d'enroulement en spirale de la bande de caoutchouc (5) afin de l'appliquer sur la plate-forme de confection (2) et l'étape d'aplatissement par le rouleau de pression (4) étant exécutées avec une différence de temps spécifiée entre les étapes, le rouleau de pression (4) étant incliné par rapport à la ligne normale de la surface du bandage pneumatique, vers sa direction de déplacement, afin de former un angle de carrossage (β).

2. Procédé de fabrication d'un bandage pneumatique selon la revendication 1, dans lequel une différence entre les vitesses de rotation de la plate-forme de confection (2) et du rouleau de pression (4) est comprise dans un intervalle représentant 0 à 30% de la vitesse de rotation de la plate-forme de confection.

3. Procédé de fabrication d'un bandage pneumatique selon les revendications 1 ou 2, dans lequel l'angle de dérive (α) correspond à 30 degrés ou moins.

4. Procédé de fabrication d'un bandage pneumatique selon l'une quelconque des revendications 1 à 3, dans lequel le rouleau de pression (4) est chauffé à une température comprise entre 100 et 130 degrés Celsius.

5. Procédé de fabrication d'un bandage pneumatique selon l'une quelconque des revendications 1 à 4, dans lequel le rouleau de pression (4) aplatit la partie étagée (8) de la partie à chevauchement (7) sous pression, une force de pression exercée par le rouleau de pression contre la plate-forme de confection (2) étant comprise entre 200 et 1000 kPa.

6. Procédé de fabrication d'un bandage pneumatique selon l'une quelconque des revendications 1 à 5, dans lequel l'étape d'aplatissement par le rouleau de pression (4) est exécutée après l'achèvement de l'étape d'enroulement en spirale de la bande de caoutchouc (5) afin de l'appliquer sur la plate-forme de confection (2).

7. Procédé de fabrication d'un bandage pneumatique selon la revendication 6, dans lequel le rouleau de pression (4) est déplacé dans la direction opposée à celle de l'étape d'enroulement en spirale de la bande de caoutchouc (5) pour exercer une pression sur la partie étagée (8) sous pression.

8. Appareil (1) de fabrication d'un bandage pneumatique, comprenant une plate-forme de confection (2), par exemple un noyau rigide ou un tambour de confection ; une extrudeuse d'une bande de caoutchouc (3) pour extruder une bande de caoutchouc en forme de ruban (5), pouvant être déplacée le long de la surface externe de la plate-forme de confection, et enroulée en spirale et appliquée directement ou indirectement sur la plate-forme de confection, tout en établissant une partie à chevauchement (7) pour former un composant spécifié du bandage pneumatique ; un rouleau de pression (4) pour aplatir une partie étagée (8) de la partie à chevauchement exposée à la surface externe du composant du pneumatique sous pression, le rouleau de pression étant agencé de sorte à faire face à la plate-forme de confection, avec un angle de dérive spécifié (α) par rapport à la direction d'extension de la bande de caoutchouc appliquée ; un dispositif de chauffage pour chauffer la surface dudit rouleau ; et un moyen de commande de la température connecté au dispositif de chauffage pour maintenir le rouleau à une température spécifiée, le rouleau de pression (4) étant adapté pour être déplacé dans la direction opposée à celle de l'étape d'enroulement en spirale de la bande de caoutchouc (5), pour exercer une pression sur la partie étagée (8) sous pression, le rouleau de pression (4) étant incliné par rapport à la ligne normale du bandage pneumatique, vers sa direction de déplacement, pour former un angle de carrossage (β).

9. Appareil de fabrication d'un bandage pneumatique selon la revendication 8, dans lequel le rouleau de pression (4) comporte un moletage sur sa surface.
